# EUROPÄISCHE PATENTSCHRIFT

(11) **EP 4 196 726 B1**
(45) Veröffentlichungstag und Bekanntmachung des Hinweises auf die Patenterteilung: **30.10.2024**
(21) Anmeldenummer: 21765833.5
(22) Anmeldetag: 16.08.2021
(51) Int. Cl.: F24S 30/425

(54) **EINACHSIG NACHGEFÜHRTES SOLARELEMENT**
UNIAXIAL-TRACKING SOLAR ELEMENT
ÉLÉMENT SOLAIRE À SUIVI UNIAXIAL

(30) Priorität: 30.09.2020 DE 102020125526
(43) Veröffentlichungstag der Anmeldung: 21.06.2023
(73) Patentinhaber: Frenell IP GmbH, 76185 Karlsruhe (DE)
(72) Erfinder: MERTINS, Max, 79107 Freiburg (DE)
(74) Vertreter: Christ, Niko
(86) Internationale Anmeldenummer: PCT/DE2021/100697
(87) Internationale Veröffentlichungsnummer: WO 2022/068988

(56) Entgegenhaltungen:
- EP-A1- 2 581 685
- EP-A1- 2 787 303
- IT-A1- PD20 090 193
- US-A1- 2015 200 621
- US-A1- 2020 153 382
- US-B2- 10 333 459

## Beschreibung

Die vorliegende Erfindung betrifft ein einachsig nachgeführtes Solarelement mit einer Trägerstruktur und einem auf dieser drehbar gelagerten Achsmodul und einer Mehrzahl mit diesem verbundener Querträger zur Lagerung wenigstens eines Solarmoduls, wobei das Achsmodul um eine Symmetrieachse drehbar und dem Umfang nach in eine Mehrzahl von entlang ihren Längskanten aneinander anschließenden Mantelabschnittsprofilen geteilt ist.

Ein derartiges nachgeführtes Solarelement ist im Stand der Technik bereits aus der US 2015/0200621 A1 vorbekannt. Dort wird ein Solarelement auf einer Mehrkantachse geführt und mit dieser durch eine ebenfalls mehrkantige Manschette verbunden, welche sich an die Mehrkantachse anschmiegt.

Weiterer Stand der Technik ist zudem aus der DE 11 2013 005 890 T5 vorbekannt. Es ist aus dieser Schrift bekannt, Solarelemente dem Sonnenstand nachzuführen, um die einzelnen Solarmodule, insbesondere Photovoltaikmodule, möglichst effizient zu betreiben. Bei einer stets möglichst senkrechten Ausrichtung zu den einfallenden Sonnenstrahlen erzielen diese Module die besten Erträge, so dass eine Drehung um eine zentrale Tragachse für diese Module hilfreich ist.

Andere einachsig nachgeführte Solarelemente sind aus US 2020/153382 A1 oder IT PD20 090 193 A1 bekannt. Ein einachsig nachgeführtes Solarelement gemäß dem Oberbegriff des Anspruchs 1 ist aus EP 2 787 303 A1 bekannt.

Bei Nord-Süd ausgerichteter Drehachse wird der erzielbare Stromertrag in den Morgen- und Abendstunden erhöht, während die horizontale Position während der Mittagszeit die maximale Stromerzeugung etwas dämpft. Ein auf diese Weise vergleichmäßigtes Stromerzeugungsprofil ist einerseits deutlich netzverträglicher und führt auch zu einer deutlich höheren Stromerzeugung über das gesamt Jahr im Vergleich zu fest positionierten Solaranlagen.

Da gerade Photovoltaikmodule einen zu schwachen eigenen Rahmen haben, um eine Befestigung entlang einer Verbindungskante direkt an der Drehachse zu ermöglichen, müssen auf der Drehachse quer angeordnete Querträger angebracht werden, welche eine Fixierung der Solarmodule entlang ihrer Längskanten ermöglichen. Die Querprofile selbst müssen eine ausreichende Höhe haben, um das durch das Modulgewicht und die Windlasten verursachte Biege-und Torsionsmoment aufnehmen zu können.

Mit der zusätzlichen Höhe der auf die Drehachse aufgesetzten Querprofile rückt die Montageebene der Solarmodule von dem Mittelpunkt der Drehachse ab, was zu erhöhten Torsionskräften auf die Drehachse in geneigten Modulpositionen führt. Diese höheren Kräfte führen zu höheren Querschnittsanforderungen der Achse und verteuert sie entsprechend. Zudem verursacht die Außermittigkeit der Modulebene ein Drehmoment, das die Festigkeitsanforderungen an die Nachführmimik und deren Kosten entsprechend erhöht.

In der oben genannten DE 11 2013 005 890 T5 wird dieses Problem dadurch gelöst, dass die längs angeordnete tragende Achse unterhalb des Mittelpunkt der Lagerachse positioniert wird, so dass die Tragachse während der Nachführung einen Bogen um die Drehachse herum beschreibt. Dies wiederum erfordert aber einen hohen Anteil an teuren Sonderbauteilen.

Vor diesem Hintergrund liegt der vorliegenden Erfindung die Aufgabe zu Grunde, ein einachsig nachgeführtes Solarelement zu schaffen, welches aufgrund der Schrägstellung auftretende Drehmomente möglichst weitgehend vermeidet, den Schwerpunkt möglichst nah an die Modulebene verschiebt und dabei teure Sonderbauteile und hohe Materialanforderungen vermeidet.

Dies gelingt durch ein einachsig nachgeführtes Solarelement gemäß den Merkmalen des unabhängigen Anspruchs 1. Weitere sinnvolle Ausgestaltungen können den sich anschließenden abhängigen Ansprüchen entnommen werden.

Erfindungsgemäß ist es vorgesehen, dass eine Trägerstruktur ein drehbar gelagertes Achsmodul aufweist, mit welcher das Achsmodul über dem Boden dem Sonnenstand nachführbar ist. An diesem Achsmodul sind mehrere Querträger angeordnet, an welchen wiederum Solarmodule angebracht werden können. Das Achsmodul selbst ist jedoch nicht einteilig hergestellt, sondern wird aus mehreren Mantelabschnittsprofilen gebildet. Dies erlaubt es, in den Mantelabschnittsprofilen Durchgriffsöffnungen vorzusehen, welche so platziert werden, dass sich gegenüberliegende Durchgriffsöffnungen eines oder mehrerer Mantelabschnittsprofile deckungsgleich zu einem Aufnahmekanal zum Einführen je eines Querträgers pro Aufnahmekanal ergänzen. Auf diese Weise ist es möglich, die Querträger in die Ebene der Drehachse abzusenken, ohne dass das Achsmodul aus der Ebene der Drehachse ausweichen muss. Die im Stand der Technik erforderliche Verlagerung des Achsmoduls aus dem Bereich der Drehachse heraus kann dadurch entfallen.

Theoretisch könnte eine Anordnung der Modulebene in der Achsmitte auch dadurch hergestellt werden, dass monolithische Achsen, massiv oder rohrförmig, mit entsprechenden Durchgriffsöffnungen versehen werden. Dies hätte jedoch den Nachteil, dass die als Korrosionsschutz dienende Zinkschicht bei den typischen Wandstärken von mehr als 2 mm dauerhaft verletzt würde, was den eingängigen technischen Normen für nachgeführte Solaranlagen widerspricht. Dies wäre bei dem hier möglichen Einsatz dünneren Materials nicht der Fall.

Auch eine Anordnung beiderseits stumpf auf das Achsmodul stoßender Querträger wäre nur mit zusätzlichem Aufwand für Befestigungselemente und damit verbundenem Arbeitsaufwand möglich.

Mit einigem Vorteil können die Mantelabschnittsprofile auf beiden Seiten längsverlaufende Längsverbindungsfalze aufweisen. Diese können durch Abkantung des Materials der Mantelabschnittsprofile hergestellt werden und dienen dazu, benachbarte Mantelabschnittsprofile miteinander zu verbinden. Die Verbindung kann vorzugsweise durch Schrauben oder Nieten erfolgen, aber auch Verschweißen oder Verlöten ist möglich. Durch die so gebildeten Flächen kann eine flächige Auflage der einzelnen Mantelabschnittsprofile erreicht werden, so dass eine sichere Verbindung hergestellt werden kann. Zudem sorgen die seitlichen Abkantungen für eine große Steifigkeit im Hinblick auf Biegung und Verwindung, so dass hierdurch auch mit einem vergleichsweise dünnen Material eine große Steifigkeit erreicht werden kann.

Zusätzlich können die Mantelabschnittsprofile aber auch zwischen den Längsverbindungsfalzen weitere Abkantungen aufweisen. Letztlich müssen die Mantelabschnittsprofile ein Achsmodul ergeben, wobei es im Hinblick auf die Stabilität sinnvoll ist, wenn dieses in sich geschlossen ist. Soweit das Achsmodul als Mehrkant-Achsmodul gebildet werden soll, so wird es mehrere gerade Wandabschnitte aufweisen, wobei im einfachsten Fall jedes Mantelabschnittsprofil einen Wandabschnitt und vorzugsweise auch benachbarte Längsverbindungsfalze aufweist. Soweit mehrere Wandabschnitte in einem Mantelabschnittsprofil umgesetzt werden, so werden diese durch eine Abkantung von einander getrennt. Im Falle eines Sechskant-Achsmoduls, welches aus zwei Mantelabschnittsprofilen hergestellt ist, würde ein Mantelabschnittsprofil zwei Abkantungen und gegebenenfalls zwei zusätzliche Abkantungen an den Längsverbindungsfalzen aufweisen.

Soweit eine Abkantung jedoch nicht vorgesehen sein soll, so ist es sinnvoll, die Mantelabschnittsprofile zwischen den Längsverbindungsfalzen zylindermantelförmig auszubilden, also in einer Richtung rund zu formen, so dass ein Zylindermantelabschnitt entsteht. Auch eine Rundformung trägt zur Stabilität der Mantelabschnittsprofile bei.

Bevorzugtermaßen grenzen die Durchgriffsöffnungen in den Wandabschnitten der Mantelabschnittsprofile direkt an die Längsverbindungsfalzen an. Dies ermöglicht es, die Längsverbindungsfalzen zusätzlich mit den Querträgern zu verbinden, um der Konstruktion weitere Stabilität hinzuzufügen.

Im Einzelnen bilden die Durchgriffsöffnungen die Außenkontur der Querträger ab, so dass zu einer möglichen Befestigung der Querträger an den Längsverbindungsfalzen auch eine kraftschlüssige Verbindung mit den Querträgern durch zusätzliche Klemmelemente oder durch ein Verschweißen hergestellt werden kann.

Die Querträger können viele geeignete Formen annehmen, so können diese insbesondere als Mehrkantprofile, U-Profile, C-Profile, T-Profile oder Hutprofile ausgestaltet werden. Besonders bevorzugt sind dabei Hutprofile, weil diese stabil sind und die freien Enden sowohl zum Auflagern auf und Verbinden mit den Längsverbindungsfalzen genutzt werden können, als auch zum Auflagern und Festlegen der Solarmodule, die hierdurch einfach zwischen die Querträger passen, wodurch die Modulebene wiederum so wenig wie möglich oberhalb der Drehachse liegt.

Mit besonderem Vorteil sind die Durchgriffsöffnungen sogar so angeordnet, dass die Aufnahmekanäle, welche durch deckungsgleich fluchtende Durchgriffsöffnungen gebildet werden, die Dreh- und vorzugsweise auch Symmetrieachse des Achsmoduls kreuzen oder wenigstens tangieren. Als tangierend wird es insbesondere noch angesehen, wenn ein Abstand der Querträger zu der Drehachse von einer Dicke des Blechs einer Längsverbindungsfalz gewahrt ist.

Nachdem es sich bei dem Achsmodul somit um ein Hohlprofil handelt, ist es sinnvoll, dieses endständig durch Stirnplatten abzuschließen. Dies schafft zudem einen Ansatzpunkt, an dem das Achsmodul von der Trägerstruktur gehalten werden kann. Hierzu kann bevorzugtermaßen die Stirnplatte die Querschnittsform des Achsmoduls aufgreifen, so dass die Stirnplatte endständig in das Achsmodul eingebracht und dort befestigt werden kann. Weiter kann die Stirnplatte mit Vorteil randständige Randverbindungsfalze aufweisen, welche durch Abkantung aus der Ebene der Stirnplatte heraus hergestellt werden und eine Verbindung mit den Mantelabschnittsprofilen erlauben. Ebenso ist es möglich, die Stirnplatte etwas größer als den Querschnitt des Achsmoduls vorzusehen und über dessen Ende zu stülpen. Mithilfe der Randverbindungsfalze kann in beiden Fällen eine Verbindung mit dem Achsmodul erfolgen.

Insbesondere eignet sich die Erfindung für eine Anwendung mit Solarmodulen, welche als Photovoltaikmodule, gegebenenfalls auch zweiseitige, so genannte bifaziale Photovoltaikmodule, ausgestaltet sind. Diese können mithilfe der Erfindung dem Sonnenstand ohne Weiteres nachgefahren werden. Eine Anwendung mit solarthermischen Kraftwerken, bei denen Spiegel an dem Tragwerk aufgehängt werden und damit ihre Ausrichtung auf ein Absorberrohr korrigiert wird, kann aber ebenfalls erfolgen.

Die vorstehend beschriebene Erfindung wird im Folgenden anhand eines Ausführungsbeispiels näher erläutert.

Es zeigen
- Figur 1: ein einachsig nachgeführtes Solarelement in perspektivischer Explosionsdarstellung von schräg oben, sowie
- Figur 2: das einachsig nachgeführte Solarelement gemäß Figur 1 in perspektivischer Darstellung von schräg oben mit abgehobener Stirnplatte.

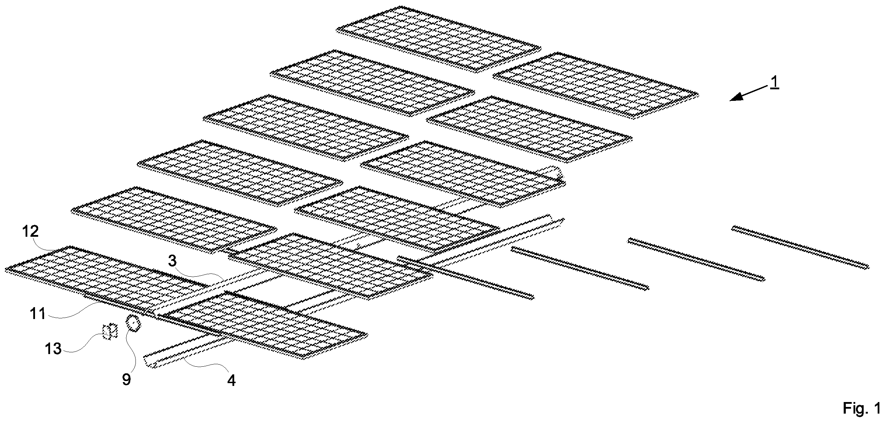

Figur 1 zeigt ein Solarelement 1, welches aus einer Mehrzahl von Photovoltaikmodulen 12 aufgebaut ist. Diese sind mithilfe von Querträgern 11 an einem Achsmodul 2 befestigt, mit dessen Hilfe eine Aufständerung an einem hier nicht gezeigten Tragwerk erfolgen kann und über dem das Achsmodul 2 mit den Photovoltaikmodulen dem Sonnenstand nachgeführt werden kann. Das Achsmodul 2 ist hierbei aus einem oberen ersten Mantelabschnittsprofil 3 und einem unteren zweiten Mantelabschnittsprofil 4 hergestellt, welche gemeinsam einen Achskörper bilden, in dessen Symmetrieachse auch gleichzeitig die Drehachse des Solarelements 1 liegt. Die Querträger 11 sind dabei in Durchgriffsöffnungen 6 des ersten Mantelabschnittsprofils 3 eingeführt, so dass die Photovoltaikmodule 12 gleichzeitig in unmittelbarer Nähe der Ebene der Drehachse liegen. Hierdurch werden das Biege- und das Torsionsmoment durch das Eigengewicht und Windlasten auf das Achsmodul 2 so weit als möglich reduziert.

Die Photovoltaikmodule 12 besitzen einen eigenen Rahmen, so dass es ausreichend ist, wenn die einzelnen Module lediglich teilweise von den Querträgern 11 erfasst sind und im Übrigen frei hängen. Die Querträger 11 sind mit einem Hutprofil ausgestaltet, so dass beiderseits endständige Abkantungen eine L-förmige Lagerfläche zum Auflegen und Anlegen des Rahmens der Photovoltaikmodule 12 ausbilden.

Stirnseitig ist beiderseits eine Stirnplatte 9 vorgesehen, welche in das Achsmodul 2 eingesteckt und befestigt werden kann, so dass Anschlussmittel 13 mit der hier nicht gezeigten Trägerstruktur verbunden werden können.

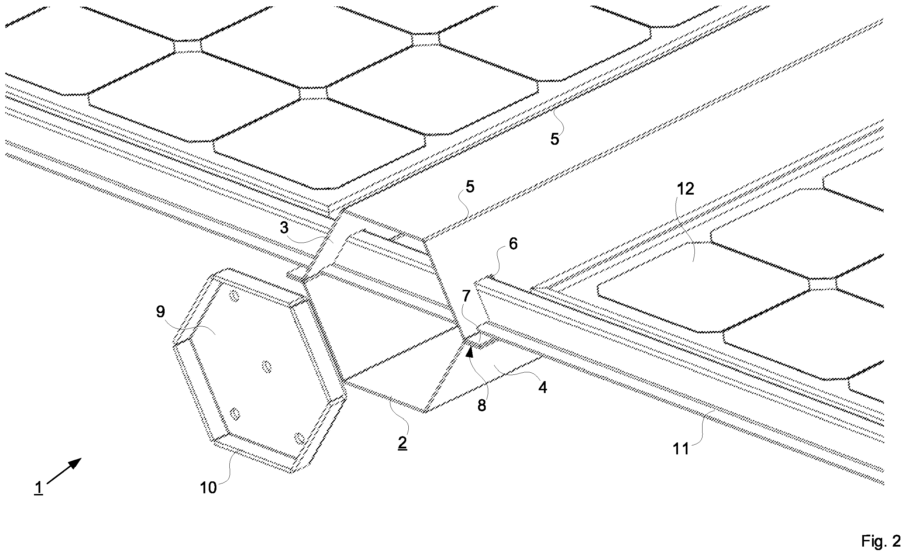

Figur 2 zeigt das zusammengebaute Solarelement 1 mit abgehobener Stirnplatte 9 im Detail. Die Stirnplatte 9 weist abschnittsweise umlaufend Randverbindungsfalzen 10 auf, welche nach einem Einbringen der Stirnplatte 9 in das Ende des von den Mantelabschnittsprofilen 3 und 4 gebildeten Hohlraums des Achsmoduls 2 mit den Mantelabschnittsprofilen 3 und 4 verbunden werden können.

Entsprechend weist das erste Mantelabschnittsprofil 3 eine erste Längsverbindungsfalz 7 auf, welche auf einer zweiten Längsverbindungsfalz 8 des zweiten Mantelabschnittsprofils 4 aufgelegt und mit diesem verbunden wird. Die beiden Mantelabschnittsprofile 3 und 4 bilden damit einen räumlichen Körper, welcher aufgrund mehrerer Abkantungen 5 trotz seiner geringen Wandstärke biege- und torsionssteif ist.

Die Querträger 11, an welchen die Photovoltaikmodule 12 befestigt sind, haben ein Hutprofil, bei dem es sich um ein U-Profil mit nach außen gewandten Abkantungen des Seitenwände handelt. Diese Form ermöglicht eine Auflagerung der Photovoltaikmodule 12 und gleichzeitig eine Auflagerung der Querträger 11 auf der ersten Längsverbindungsfalz 7.

Das erste Mantelabschnittsprofil 3 weist Durchgriffsöffnungen 6 auf, welche entsprechend der Hutform der Querträger 11 geformt sind, so dass die Querträger 11 durch zwei deckungsgleich gegenüberliegende, wenngleich zueinander schrägstehende, Durchgriffsöffnungen 6 durchgeführt werden kann. Der Querträger 11 muss hernach nicht mehr zwingend gegenüber dem ersten Mantelabschnittsprofil 3 befestigt werden, sondern kann aufgrund der beiderseitigen Verbindung mit den Photovoltaikmodulen 12 in keine der beiden Richtungen verlorengehen. Eine Verbindung empfiehlt sich trotzdem, diese kann etwa durch ein Verschrauben mit den Längsverbindungsfalzen 7 und 8 erfolgen.

Dadurch, dass die Querträger 11 durch das Innere des Achsmoduls 2 hindurchgeführt ist, liegen die Photovoltaikmodule 12 nahezu in der Ebene der Drehachse des Achsmoduls 2, welche vorliegend gleichzeitig die Symmetrieachse des Achsmoduls 2 darstellt. Die Biege- und Torsionsmomente an dem Achsmodul 2 aufgrund der Photovoltaikmodule 12 sind damit so weit wie möglich reduziert.

Vorstehend beschrieben ist somit ein einachsig nachgeführtes Solarelement, welches aufgrund der Schrägstellung auftretende Drehmomente möglichst weitgehend vermeidet, den Schwerpunkt möglichst nah an die Modulebene verschiebt und dabei teure Sonderbauteile und hohe Materialanforderungen vermeidet.

### BEZUGSZEICHENLISTE

- 1: Solarelement
- 2: Achsmodul
- 3: erstes Mantelabschnittsprofil
- 4: zweites Mantelabschnittsprofil
- 5: Abkantung
- 6: Durchgriffsöffnung
- 7: erste Längsverbindungsfalz
- 8: zweite Längsverbindungsfalz
- 9: Stirnplatte
- 10: Randverbindungsfalz
- 11: Querträger
- 12: Photovoltaikmodul
- 13: Anschlussmittel

## Patentansprüche

1. Einachsig nachgeführtes Solarelement (1) mit einer Trägerstruktur und einem auf dieser drehbar gelagerten Achsmodul (2) und einer Mehrzahl mit diesem verbundener Querträger (11) zur Lagerung wenigstens eines Solarmoduls, wobei das Achsmodul (2) um eine Symmetrieachse drehbar und dem Umfang nach in eine Mehrzahl von entlang ihren Längskanten aneinander anschließenden Mantelabschnittsprofilen (3, 4) geteilt ist,
**dadurch gekennzeichnet, dass** den Mantelabschnittsprofilen (3, 4) eine Mehrzahl von Durchgriffsöffnungen (6) zugeordnet sind, welche in einem zusammengefügten Zustand des Achsmoduls (2) einander paarweise derart gegenüberliegen, dass sie einen Aufnahmekanal zum Durchführen je eines Querträgers (11) ausbilden.

2. Solarelement gemäß Anspruch 1, **dadurch gekennzeichnet, dass** die Mantelabschnittsprofile (3, 4) beiderseits parallel zu ihren Längskanten verlaufende Längsverbindungsfalze (7, 8) aufweisen, wobei sich benachbarte Mantelabschnittsprofile (3, 4) des Achsmoduls (2) an den Flächen der Längsverbindungsfalze (7, 8) kontaktieren.

3. Solarelement gemäß Anspruch 2, **dadurch gekennzeichnet, dass** die Mantelabschnittsprofile (3, 4) jeweils wenigstens eine parallel zu ihren Längskanten verlaufende Abkantung (5) zwischen den Längsverbindungsfalzen (7, 8) aufweisen.

4. Solarelement gemäß Anspruch 2, **dadurch gekennzeichnet, dass** die Mantelabschnittsprofile zwischen den Längsverbindungsfalzen (7, 8) eine zylindermantelförmige Wölbung aufweisen.

5. Solarelement gemäß einem der Ansprüche 2 bis 4, **dadurch gekennzeichnet, dass** die Durchgriffsöffnungen (6) direkt an die Längsverbindungsfalzen (7, 8) angrenzen.

6. Solarelement gemäß einem der vorhergehenden Ansprüche, **dadurch gekennzeichnet, dass** die Durchgriffsöffnungen (6) die Außenkontur der Querträger (11) derart abbilden, dass die Querträger (11) formschlüssig in den Durchgriffsöffnungen (6) aufgenommen sind.

7. Solarelement gemäß Anspruch 6, **dadurch gekennzeichnet, dass** es sich bei den Querträgern (11) um Mehrkantprofile, U-Profile, C-Profile, T-Profile oder Hutprofile handelt.

8. Solarelement gemäß einem der vorhergehenden Ansprüche, **dadurch gekennzeichnet, dass** der Aufnahmekanal die Symmetrieachse des Achsmoduls (2) kreuzt oder tangiert.

9. Solarelement gemäß einem der vorhergehenden Ansprüche, **dadurch gekennzeichnet, dass** das Achsmodul (2) beidseitig durch jeweils eine Stirnplatte (9) abgeschlossen ist, an welcher jeweils die Trägerstruktur mit Anschlussmitteln (13) angreift.

10. Solarelement gemäß Anspruch 9, **dadurch gekennzeichnet, dass** die Stirnplatte (9) die Querschnittsform des Achsmoduls (2) aufweist und in diese formschlüssig einfügbar und vermittels rings um die Außenkontur der Stirnplatte (9) angeordneter, von der Stirnplatte (9) abgekanteter Randverbindungsfalze (10) mit den Mantelabschnittsprofilen (3, 4) verbindbar ist.

11. Solarelement gemäß einem der vorhergehenden Ansprüche, **dadurch gekennzeichnet, dass** die Mantelabschnittsprofile (3, 4) als Halbschalen ausgebildet sind.

12. Solarelement gemäß einem der vorhergehenden Ansprüche, **dadurch gekennzeichnet, dass** es sich bei den Solarmodulen um einseitige Photovoltaikmodule (12), zweiseitige Photovoltaikmodule oder Spiegelmodule handelt.

## Claims

1. A uniaxially tracking solar element (1) comprising a carrier structure and an axis module (2) rotatably supported thereon, and a plurality of crossmembers (11), connected to the axis module, for supporting at least one solar module, the axis module (2) being rotatable about an axis of symmetry, and on its circumference being divided into a plurality of casing section profiles (3, 4) that adjoin one another along their longitudinal edges,
**characterized in that** a plurality of through openings (6) are associated with the casing section profiles (3, 4), and in an assembled state of the axis module (2) the through openings are situated opposite one another in pairs in such a way that they form a receiving channel for the passage of a respective crossmember (11).

2. The solar element according to claim 1, **characterized in that** the casing section profiles (3, 4) have longitudinal connecting seams (7, 8) extending in parallel to their longitudinal edges on both sides, and neighboring casing section profiles (3, 4) of the axis module (2) make contact at the surfaces of the longitudinal connecting seams (7, 8).

3. The solar element according to claim 2, **characterized in that** the casing section profiles (3, 4) have at least one respective fold (5), extending in parallel to their longitudinal edges, between the longitudinal connecting seams (7, 8).

4. The solar element according to claim 2, **characterized in that** the casing section profiles have a cylindrical casing-shaped curvature between the longitudinal connecting seams (7, 8).

5. The solar element according to one of claims 2 through 4, **characterized in that** the through openings (6) directly adjoin the longitudinal connecting seams (7, 8).

6. The solar element according to one of the preceding claims, **characterized in that** the through openings (6) reproduce the outer contour of the crossmembers (11) in such a way that the crossmembers (11) are accommodated in the through openings (6) in a form-fit manner.

7. The solar element according to claim 6, **characterized in that** the crossmembers (11) are polygonal profiles, U profiles, C profiles, T profiles, or cap profiles.

8. The solar element according to one of the preceding claims, **characterized in that** the receiving channel intersects with or is tangential to the axis of symmetry of the axis module (2).

9. The solar element according to one of the preceding claims, **characterized in that** the axis module (2) is closed off on both sides by a respective end plate (9), which is gripped in each case by the carrier structure via connecting means (13).

10. The solar element according to claim 9, **characterized in that** the end plate (9) has the cross-sectional shape of the axis module (2) and is insertable therein in a form-fit manner, and is connectable to the casing section profiles (3, 4) via edge connecting seams (10) that are situated around the outer contour of the end plate (9) and folded from the end plate (9).

11. The solar element according to one of the preceding claims, **characterized in that** the casing section profiles (3, 4) are designed as half-shells.

12. The solar element according to one of the preceding claims, **characterized in that** the solar modules are one-sided photovoltaic modules (12), two-sided photovoltaic modules, or mirror modules.

## Revendications

1. Un élément solaire à suivi uniaxiale (1) comprenant une structure porteuse et un module d'axe (2) supporté de manière rotative, et plusieurs traverses (11), reliées au module d'axe, pour supporter au moins un module solaire, le module d'axe (2) étant rotatif autour d'un axe de symétrie, et étant divisé sur sa circonférence en plusieurs profils de section de boîtier (3, 4) qui sont adjacents les uns aux autres le long de leurs bords longitudinaux,
**caractérisé en ce qu'**une pluralité d'ouvertures traversantes (6) sont associées aux profils de section de boîtier (3, 4) et que, dans un état assemblé du module d'axe (2), les ouvertures traversantes sont situées l'une en face de l'autre, par paires, de manière à former un canal de réception pour le passage d'une traverse (11) respective.

2. L'élément solaire selon la revendication 1, **caractérisé par le fait que** les profils de section de boîtier (3, 4) ont des plis de connexion longitudinaux (7, 8) s'étendant parallèlement à leurs bords longitudinaux des deux côtés, et que les profils de section de boîtier voisins (3, 4) du module d'axe (2) sont en contact sur les surfaces des plis de connexion longitudinaux (7, 8).

3. L'élément solaire selon la revendication 2, **caractérisé en ce que** les profilés de la section du boîtier (3, 4) ont au moins un bord respectif (5), s'étendant parallèlement à leurs bords longitudinaux, entre les plis de connexion longitudinaux (7, 8).

4. L'élément solaire selon la revendication 2, **caractérisé en ce que** les profils de section de boîtier ont une courbure cylindrique en forme de boîtier entre les plis de connexion longitudinaux (7, 8).

5. L'élément solaire selon l'une des revendications 2 à 4, **caractérisé en ce que** les ouvertures traversantes (6) sont directement adjacentes aux plis de connexion longitudinaux (7, 8).

6. L'élément solaire selon l'une des revendications précédentes, **caractérisé en ce que** les ouvertures traversantes (6) reproduisent le contour extérieur des traverses (11) de manière à ce que les traverses (11) soient logées dans les ouvertures traversantes (6) par verrouillage positif.

7. L'élément solaire selon la revendication 6, **caractérisé en ce que** les traverses (11) sont des profils polygonaux, des profils en U, des profils en C, des profils en T ou des profils en chapeau.

8. L'élément solaire selon l'une des revendications précédentes, **caractérisé en ce que** le canal de réception coupe ou est tangentiel à l'axe de symétrie du module d'axe (2).

9. L'élément solaire selon l'une des revendications précédentes, **caractérisé en ce que** le module d'axe (2) est fermé des deux côtés par une plaque d'extrémité respective (9), qui est saisie respectivement par la structure porteuse via des moyens de connexion (13).

10. L'élément solaire selon la revendication 9, **caractérisé en ce que** la plaque d'extrémité (9) a la forme de la section transversale du module d'axe (2) et peut être insérée à l'intérieur de celle-ci par verrouillage positif, et est reliée aux profils de section de boîtier (3, 4) par des plis de connexion de bord (10) qui sont situées autour du contour extérieur de la plaque d'extrémité (9) et pliées à partir de la plaque d'extrémité (9).

11. L'élément solaire selon l'une des revendications précédentes, **caractérisé en ce que** les profils de la section du boîtier (3, 4) sont conçus comme des demi-coquilles.

12. L'élément solaire selon l'une des revendications précédentes, **caractérisé en ce que** les modules solaires sont des modules photovoltaïques unilatéraux (12), des modules photovoltaïques bilatéraux ou des modules miroirs.
